Europäisches Patentamt

European Patent Office

Office européen des brevets

(11) Veröffentlichungsnummer: **0 268 107 B1**

(12) **EUROPÄISCHE PATENTSCHRIFT**

(51) Int. Cl.⁵: **G08B 17/10, H02H 3/10**

(45) Veröffentlichungstag der Patentschrift:
11.07.90

(21) Anmeldenummer: 87115606.3

(22) Anmeldetag: 23.10.87

(54) Schutzvorrichtung gegen Gasexplosionen in Wohnräumen.

(30) Priorität: 27.10.86 DE 3636502

(43) Veröffentlichungstag der Anmeldung:
25.05.88 Patentblatt 88/21

(45) Bekanntmachung des Hinweises auf die Patenterteilung:
11.07.90 Patentblatt 90/28

(84) Benannte Vertragsstaaten:
AT BE CH FR GB IT LI NL SE

(56) Entgegenhaltungen:
EP-A- 0 197 257
DE-A- 2 319 476
DE-A- 3 208 553
DE-B- 2 738 347
DE-C- 828 881
FR-A- 2 543 839
US-A- 4 443 793

(73) Patentinhaber: Gärtner, Paul, Dipl.-Kfm.,
Kleinstrasse 11, D-8000 München 70(DE)

(72) Erfinder: Gärtner, Paul, Dipl.-Kfm., Kleinstrasse 11,
D-8000 München 70(DE)
Erfinder: Sablijic, Dragan, Dipl.-Ing., Buconjiceva 19,
YU-41000 Zagreb(YU)
Erfinder: Juros, Ante, Jazbinski odvojak 14a,
YU-41000 Zagreb(YU)

(74) Vertreter: Brose, D. Karl, PATENTANWÄLTE BROSE &
BROSE Wiener Strasse 2, D-8023 München-Pullach(DE)

**Beschreibung**

Die Erfindung betrifft eine Schutzvorrichtung gegen eine Gasexplosion in geschlossenen Räumen, insbesondere in Wohnräumen, mit einem Gassensor zum Nachweis von Gas und/oder Rauch und mit einer Alarmeinrichtung zum Erzeugen eines Alarms bei Ansprechen des Gassensors, wobei die Schutzvorrichtung an das Leitungsnetz der Wohnungsinstallation anschließbar ist und beim Ansprechen des Gassensors über das Leitungsnetz ein Schutzrelais zum Abschalten der Stromversorgung aktiviert wird.

Eine Schutzvorrichtung dieser Art, welche dazu dient, vor Explosionen zu schützen, wenn in der Wohnung niemand anwesend ist, ist aus der EP-A 0 197 257 bekannt. Bei dieser bekannten Vorrichtung wird durch Abschalten der Stromversorgung die Möglichkeit einer Funkenbildung bei elektrischen Geräten und Vorrichtungen in Wohnräumen verhindert, welche eine Zündung und Explosion einer explosiven Gasmischung hervorrufen könnte. Gleichzeitig wird bei der bekannten Schutzvorrichtung ein Licht- und Tonalarm eingeschaltet, mit dem die sich innerhalb oder außerhalb der Wohnräume befindlichen Personen vor dem Gasaustritt gewarnt werden können.

Aus der FR-A 2 543 839 ist ferner eine Vorrichtung zum Detektieren von Gas bekannt, welches sich infolge einer unzulässigen hohen Erwärmung von elektrischen Schaltungsanordnungen entwickelt. Bei dieser bekannten Vorrichtung wird im Gefahrenfalle ein im Leitungsnetz eingebautes Schutzrelais zum Abschalten der Stromversorgung aktiviert, indem die Schutzvorrichtung beim Ansprechen des Gassensors auf der Schutzleitung ein Stromsignal erzeugt, welches das Schutzrelais öffnet. Die Abschaltung der Stromversorgung erfolgt zum Schutz vor einer möglichen Brandentwicklung innerhalb des betreffenden defekten elektrischen Geräts.

Ausgehend von einer Schutzvorrichtung der eingangs definierten Art liegt der Erfindung die Aufgabe zugrunde, eine bei der Durchführung von Neuinstallationen verwendbare Vorrichtung zu schaffen, welche unter Verwendung einer minimalen Anzahl von Bauteilen die Funktion der Stromabschaltung und die Funktion der Einschaltung von Alarmsignalen gewährleistet.

Diese Aufgabe wird bei einer Schutzvorrichtung der eingangs definierten Art durch die Kombination folgender Merkmale gelöst:

Der Gassensor ist zur Einstellung des Arbeitspunktes mit der Plus-Leitung über einen in Reihe geschalteten Trimmer und einen Widerstand verbunden, die Leitung zwischen Trimmer und Sensor ist einerseits über den Sensor mit der Masse verbunden und andererseits mit der Basis eines Transistors gekoppelt, der Emitter des Transistors ist einerseits mit dem Emitter eines Transistors verbunden und andererseits über einen Widerstand mit der Masse, der Kollektor des Transistors ist einerseits über einen Widerstand mit der Plus-Leitung und andererseits über einen Widerstand mit der Basis des Transistors verbunden, der Transistor sperrt gleich nach dem Spannungsanschluß, während der Sensor stabilisiert wird, da er seinen Kollektor mit der Basis des Transistors gekoppelt hat, der Emitter des Transistors liegt auf Masse, seine Basis liegt über einem Widerstand einerseits ebenfalls auf Masse und über eine Reihenschaltung eines Widerstands und eines Kondensators auf der Plus-Leitung, der Kollektor des Transistors ist mit dem Gate eines Triaks verbunden, dessen eine Anode mit dem Phasenleiter über einen Widerstand mit dem Schutzleiter verbunden ist, wodurch es im Falle einer Gaserscheinung zum Stromdurchgang durch den Schutzleiter kommt, was ein Auswerfen des Schutzschalters hat, der Widerstand ist außerhalb des Gerätegehäuses angeordnet, Phasen- und Nulleiter vor dem Schutzschalter sind an entsprechenden Eingängen der Vorrichtung angeschlossen, eine Seite des Widerstandes ist mit dem "Z"-Anschluß der Vorrichtung verbunden, während die andere Seite des Widerstandes mit dem Nulleiter hinter dem Schutzschalter verbunden ist, die Alarmeinrichtung ist zwischen den "Z"- und "N"-Anschlüssen der Vorrichtung geschaltet.

Es ist offensichtlich, daß durch diese Art der Konstruktion ohne ein zusätzliches Relais die notwendigen Funktionen der Schutzvorrichtung sichergestellt sind.

Bei einer bevorzugten Ausführungsform ist die Schutzvorrichtung derart ausgebildet, daß sie beim Ansprechen des Gassensors auf der Schutzleitung der Wohnungsinstallation in bekannter Weise ein Stromsignal erzeugt, welches das Schutzrelais öffnet.

Im folgenden wird die Erfindung anhand von in den Zeichnungen näher veranschaulichten Ausführungsbeispielen näher erläutert.

In der Zeichnung zeigen:

Fig. 1 das elektronische Schaltschema der Schutzvorrichtung,

Fig. 2 das Schaltschema einer ersten Variante, wie sie im wesentlichen aus der FR-A 2 543 839 bekannt ist, und

Fig. 3 das Schaltschema der erfindungsgemäßen Variante.

Die Funktionsweise beider Varianten ist im wesentlichen diejenige, daß das Gaswarngerät bei einer Gaserscheinung, die in ihrer Konzentration wesentlichen kleiner sein kann als die untere Explosionsgrenze, derart reagiert, daß es ein Stromsignal durch die Schutzleitung der Wohnungsinstallation schickt. Der Strom in der Schutzleitung aktiviert das Stromschutzrelais FID und damit ist das Netz in der ganzen Wohnung abgeschaltet. Jedwede Funkenbildung beim Betätigen elektrischer Geräte, Lichtschalter und dergleichen ist nunmehr vollkommen ausgeschlossen. Hiermit ist die Explosionsgefahr drastisch verringert.

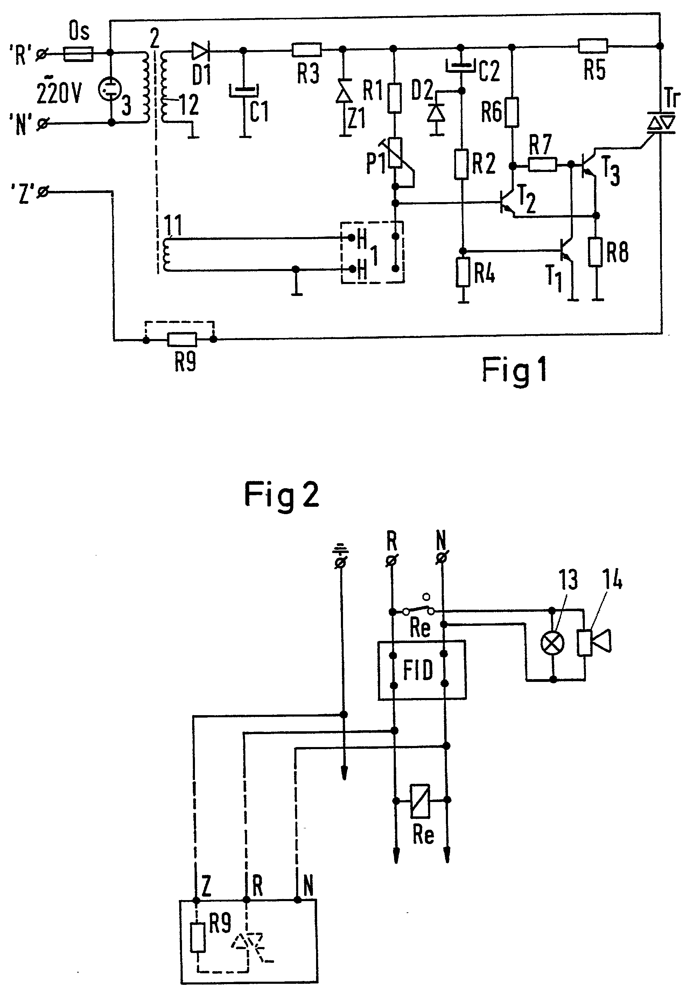

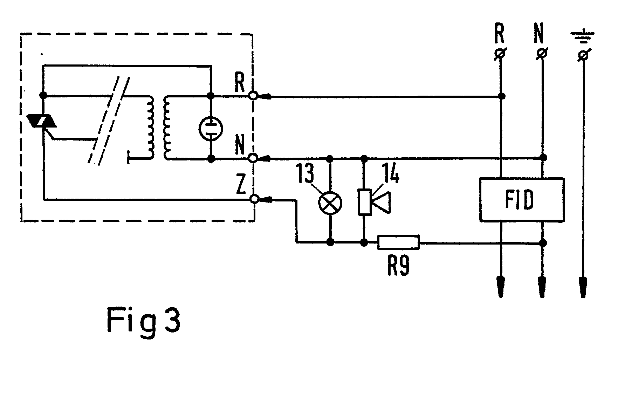

Im folgenden wird die Variante 1 insbesondere unter Bezugnahme auf Fig. 1 näher beschrieben.

Jedwede Gaserscheinung in der Wohnung, die in der Konzentration um ein vielfaches kleiner als die untere Explosionsgrenze ist, ruft eine Verringerung des ohmschen Widerstandes des Sensors 1 hervor.

Die Vorrichtung gemäß Fig. 1 umfaßt einen Transformator 2, der sekundärseitig zwei Wicklungen aufweist. Die eine Sekundärwicklung 11 sorgt für die Spannung der Sensorheizung (1 Volt, 1 Ampere) und die andere Sekundärwicklung 12 sorgt für die Steuerspannung (15 Volt). Die Steuerspannung wird durch eine Diode D1 gleichgerichtet und mittels einer Zener-Diode Z1 auf 12 Volt stabilisiert.

Der Sensor 1 benötigt ca. 30 bis 40 Sekunden an Aufheizzeit, um einen stabilen Zustand zu erreichen und seine Funktion zuverlässig ausführen zu können. Der Einsatz der Transistoren T1 bis T3 mit ihrer RC-Konstante verhindert eine falsche Betätigung der Vorrichtung während der Sensorstabilisierung.

Mittels eines Trimmers P1 wird die Empfindlichkeit bzw. die Betätigungsschwelle der Vorrichtung so eingestellt, daß es bereits bei einer sehr niedrigen Gaskonzentration zu einer Verringerung des Sensorwiderstandes kommt, was eine Spannungsverminderung am Transistor T2 bzw. die Betätigung des Triak Tr aufgrund der T3-Transistor-Durchführung im Schmitt-Trigger-Satz zur Folge hat.

Der Triak Tr ist mit der einen Anode an der Phasenleitung R und mit der anderen Anode über einen Widerstand R9 am Schutzleiter (Erdeanschluß Z) verbunden. Bei Durchschaltung des Triak Tr kommt es augenblicklich zu einer Spannungserscheinung auf dem Schutzleiter.

Diese Spannungserscheinung auf dem Schutzleiter aktiviert einen Spannungsschutzsohalter oder einen Stromschutzschalter FID, der die Stromspeisung der ganzen Wohnung ausschaltet. Auf diese Weise wird die Wahrscheinlichkeit einer Explosion drastisch vermindert, da Funkenerscheinungen beim Einschalten, beim Ausschalten oder beim sonstigen Betätigen elektrischer Geräte und Vorrichtungen unmöglich gemacht werden.

Der Widerstand R9 wird gemäß den spezifischen Anforderungen der Schutzschalter dimensioniert, und zwar im Hinblick auf möglichst geringe, aber ausreichend große Stromwerte, um ein zuverlässiges Aktivieren der Schutzschalter sicher zu stellen.

Die Lichtsignalisierung, Tonsignalisierung oder eine andere Alarmsignalisierung wird auf eine solche Weise ausgeführt, daß ein Relais hinter das Schutzrelais FID geschaltet wird, so daß dessen Spule hinter dem Schutzschalter gespeist wird. Demgegenüber werden Alarmlampe 13 und Alarmhorn bzw. Sirene 14 vor dem Schutzschalter FID gespeist und zwar über den Ruhekontakt des Relais Re.

Nach Beendigung der Gaserscheinung schaltet die Schutzvorrichtung den Alarm selbsttätig ab.

Der Glimmer 3 zeigt bei seinem Aufleuchten die richtige Verbindung der Schutzvorrichtung mit der Netzspannung an. Es ist erforderlich, daß Nulleiter und Phasenleiter mit der Schutzvorrichtung richtig verbunden sind.

Die Schutzvorrichtung wird durch einen einfachen Anschluß des Geräts an eine beliebige Netzsteckdose in Betrieb gesetzt. Die Anschlußstelle sollte in der Nähe einer möglichen Gasquelle sein, um einen möglichst effizienten Schutz zu ermöglichen. Hierbei sollte den physikalischen Gaseigenschaften Rechnung getragen werden, d. h. je nach dem, ob das möglicherweise austretende Gas schwerer oder leichter als Luft ist, sollte das Gerät in Bodennähe oder in Deckennähe montiert werden.

Die vorstehend geschilderte Variante 1 ist für Anwendungen in Wohnungen bestimmt, in denen man keine Änderungen der vorhandenen Elektroinstallation vornehmen will. Unter der Voraussetzung, daß in die vorhandene Installation ein Schutzschalter eingebaut ist, ist die Schutzvorrichtung nach Anschluß an die vorhandene Installation sofort betriebsbereit.

Die im Zusammenhang mit Fig. 3 dargestellte erfindungsgemäße Variante der Schutzvorrichtung wird bei der Durchführung einer neuen Installation verwendet. Bei dieser Variante führt die Vorrichtung die Funktion der Stromabschaltung und die Funktion der Einschaltung von Ton/Lichtsignalen ohne zusätzliches Relais aus. Im folgenden wird bei der Erläuterung der weiteren Variante nur der Unterschied im Bezug aus die zuerst geschilderte Variante beschrieben.

Im Falle der zweiten Variante befindet sich der Widerstand R9 nicht mehr innerhalb des Vorrichtungsgehäuses, er wird vielmehr auf die Verteilungsschalttafel oder an einer anderen geeigneten Stelle montiert.

Phasen- und Nulleiter R bzw. N werden vor dem Schutzschalter FID an entsprechende Anschlüsse R und N der Vorrichtung angeschlossen. Ein Ende des Widerstandes R9 wird an den "Z"-Anschluß der Vorrichtung angeschlossen und das andere Ende des Wid erstandes R9 wird an den Nulleiter nach dem Schutzschalter angeschlossen.

Licht- und Tonalarm 13, 14 werden zwischen die Anschlüsse "Z" und "N" der Vorrichtung angeschlossen.

Im Falle einer Gaserscheinung reagiert die Vorrichtung in der vorher beschriehenen Weise, ein Stromteil umgeht jedoch den Schutzschalter, und auf diese Weise wird ein ausreichend großes Ungleichgewicht hervorgerufen, um zu erreichen, daß der Schalter FID die Spannung abschaltet. In diesem Moment wird der Stromkreis von der Phase (vor dem Schalter)über Triak, Lampe und Hupe auf dem Nulleiter geschlossen und auf diese Weise der Ton- und Lichtalarm betätigt.

Bei Verminderung der Gaskonzentration unter die gefährliche bzw. unter die eingestellte Grenze wird die Vorrichtung selbsttätig deaktiviert und der Alarm abgeschaltet. Die Wohnung bleibt aber ohne Spannung, bis der Schutzschalter wieder eingeschaltet wird.

**Patentansprüche**

1. Schutzvorrichtung gegen eine Gasexplosion in geschlossenen Räumen, insbesondere in Wohnräumen, mit einem Gassensor (1) zum Nachweis von Gas und/oder Rauch und mit einer Alarmeinrichtung (13, 14) zum Erzeugen eines Alarms bei Ansprechen des Gassensors (1), wobei die Schutzvorrichtung an das Leitungsnetz der Wohnungsinstallation anschließbar ist und bei Ansprechen des Gassensors (1) über das Leitungsnetz ein Schutzschalter (FID) zum Abschalten der Stromversorgung der Wohnräume aktiviert wird, gekennzeichnet durch die Kombination nachfolgender Merkmale:

Der Gassensor (1) ist zur Einstellung des Arbeitspunktes mit der Plus-Leitung über einen in Reihe geschalteten Trimmer (P1) und einen Widerstand (R1) verbunden, die Leitung zwischen Trimmer (P1 und Sensor (1) ist einerseits über den Sensor (1) mit der Masse verbunden und andererseits mit der Basis eines ersten Transistors (T2) gekoppelt, der Emitter des ersten Transistors (T2) ist einerseits mit dem Emitter eines zweiten Transistors (T3) verbunden und andererseits über einen Widerstand (R8) mit der Masse, der Kollektor des ersten Transistors (T2) ist einerseits über einen Widerstand (R6) mit der Plus-Leitung und andererseits über einen Widerstand (R7) mit der Basis des zweiten Transistors (T3) verbunden, der Emitter eines dritten Transistors (T1) liegt auf Masse, seine Basis liegt über einem Widerstand (R4) einerseits ebenfalls auf Masse und über eine Reihenschaltung eines Widerstands (R2) und eines Kondensators (C2) auf der Plus-Leitung, sein Kollektor ist mit der Basis des zweiten Transistors (T3) gekoppelt, so daß der dritte Transistor (T1) gleich nach dem Spannungsanschluß sperrt, während der Sensor (1) stabilisiert wird, der Kollektor des zweiten Transistors (T3) ist mit dem Gate eines Triaks (Tr) verbunden, dessen eine Anode mit dem Phasenleiter (R) und dessen andere Anode über einen Widerstand (R9) mit dem Schutzleiter (Z) verbunden ist, wodurch es im Falle einer Gaserscheinung zum Stromdurchgang durch den Schutzleiter kommt, was ein Ansprechen des Schutzschalters (FID) bewirkt, der Widerstand (R9) ist außerhalb des Gerätegehäuses angeordnet, Phasen- und Nulleiter (R bzw. N) vor dem Schutzschalter (FIS) sind an entsprechenden Eingängen der Vorrichtung ("R" und "N") angeschlossen, eine Seite des Widerstandes (R9) ist mit dem "Z"-Anschluß der Vorrichtung verbunden, während die andere Seite des Widerstandes (R9) mit dem Nulleiter hinter dem Schutzschalter (FID) verbunden ist, die Alarmeinrichtung (13, 14) ist zwischen den "Z"- und "N"-Anschlüssen der Vorrichtung geschaltet.

2. Schutzvorrichtung nach Anspruch 1, dadurch gekennzeichnet, daß sie beim Ansprechen des Gassensors (1) auf der Schutzleitung der Wohnungsinstallation ein Stromsignal erzeugt, welches den Schutzschalter (FID) öffnet.

## Claims

1. Protection device against gas explosions in enclosed spares, particularly in homes, with a gas sensor (1) to detect gas and/or smoke and with an alarm system (13, 14) to signal an alarm when the gas sensor (1) is triggered, in which the protection device can be connected to the domestic mains supply and, when the gas sensor (1) is triggered via the mains, a protective circuit-breaker (FID) is activated to switch off the power supply to the home, characterized by a combination of the following features:

The gas sensor (1) is connected to the plus lead via a series-connected trimmer (P1) and a resistance (R1) to set the operating point; the lead between the trimmer (P1) and sensor (1) is connected at one end to earth via the sensor (1) and, at the other end, to the base of a first transistor (T2); the emitter of the first transistor (T2) is connected at one end with the emitter of a second transistor (T3) and, at the other end, via a resistance (R8) to earth, while the collector of the first transistor (T2) is connected at one end via a resistance (R6) to the plus lead and, at the other end, via a resistance (R7) to the base of the second transistor (T3); the emitter of a third transistor (T1) is connected to earth, while its base is also connected to earth via a resistance (R4) at one end and to the plus lead via a series-connected resistance (R2) and capacitor (C2), and its collector is connected to the base of the second transistor (T3) such that the third transistor (T1) is blocked immediately after the current input terminal while the sensor (1) is stabilized; the collector of the second transistor (T3) is connected to the gate of a triac (Tr), one anode of which is connected to the phase conductor (R) and the other anode of which is connected via a resistance (R9) to the protective conductor (Z), as a result of which a current is transmitted through the protective conductor in the case of a gas leak, which causes the protective circuit-breaker (FID) to be tripped; the resistance (R9) is located outside the instrument housing; the phase and PEN conductors (R and N respectively) before the protective circuit-breaker (FID) are connected to appropriate inputs of the device ("R" and "N"); one side of the resistance (R9) is connected to the "Z" terminal of the device while the other side of the resistance (R9) is connected to the PEN conductor after the protective circuit-breaker (FID); the alarm device (13, 14) is wired between the "Z" and "N" terminals of the device.

2. Protection device according to claim 1, characterized therein that, when the gas sensor (1) is tripped, a signal is generated in the protective conductor of the domestic installation which opens the protective circuit-breaker (FID).

## Revendications

1. Dispositif de protection contre les explosions en présence de gaz combustibles dans des logements, comportant un capteur de gaz (1) pour la détection de gaz et/ou de fumée et un dispositif d'alarme (13, 14) pour produire une alarme lorsque le capteur de gaz (1) réagit, le dispositif de protection pouvant être raccordé à l'alimentation secteur du logement et activant, par l'intermédiaire de l'alimentation secteur, un commutateur de sécurité (FID) lorsque le capteur de gaz (1) réagit, pour interrompre l'alimentation en courant des pièces du logement, caractérisé par la combinaison des caractéristiques suivantes:

le capteur de gaz (1) est connecté pour le réglage du point de travail au conducteur positif par l'intermédiaire d'un potentiomètre-trimmer (P1) et d'une résistance (R1) connectés en série;

le conducteur entre le potentiomètre-trimmer (P1) et le capteur (1) est d'une part raccordé à la masse par l'intermédiaire du capteur (1) et d'autre part à la base d'un premier transistor (T2);

l'émetteur du premier transistor (T2) est d'une part raccordé à l'émetteur d'un deuxième transistor (T3) et d'autre part à la masse par l'intermédiaire d'une résistance (R8), alors que le collecteur du premier transistor (T2) est d'une part connecté par l'intermédiaire d'une résistance (R6) avec le conducteur positif et d'autre part par une résistance (R7) à la base du deuxième transistor (T3);

l'émetteur d'un troisième transistor (T1) est raccordé à la masse, sa base étant également raccordée à la masse par l'intermédiaire d'une résistance (R4) d'une part et d'autre part au conducteur positif par l'intermédiaire d'un raccordement en série d'une résistance (R2) et d'un condensateur (C2), et son collecteur est connecté à la base du deuxième transistor (T3) de sorte que le troisième transistor (T1) est bloqué immédiatement après le raccordement de la tension, alors que le capteur (1) est stabilisé;

le collecteur du deuxième transistor (T3) est raccordé au gate d'un triax (Tr) dont l'une des anodes est raccordée au conducteur de phases (R) et dont l'autre anode est raccordée au conducteur de protection (Z) par l'intermédiaire d'une résistance (R9), le conducteur de protection étant traversé par le courant lorsque du gaz apparaît, ce qui provoque la réaction du commutateur de sécurité (FID);

la résistance (R9) est disposée en dehors du boîtier de l'appareil, les conducteurs de phases et neutre (R et N) étant disposés devant le commutateur de sécurité (FID) aux entrées correspondantes du dispositif ("R" et "N"), un côté de la résistance (R9) étant raccordé au raccordement "Z" du dispositif, alors que l'autre côté de la résistance (R9) est raccordé au conducteur neutre derrière le commutateur de sécurité (FID), le dispositif d'alarme (13, 14) étant connecté entre les raccordements "Z" et "N" du dispositif.

2. Dispositif de protection selon la revendication 1, caractérisé en ce qu'un signal de courant est produit sur le conducteur de sécurité de l'installation du logement lorsque le capteur de gaz (1) réagit, signal électrique qui ouvre le commutateur de sécurité (FID).

Fig 1

Fig 2

Fig 3